# FASCICULE DE BREVET EUROPEEN

(11) **EP 0 623 429 B1**
(45) Date de publication et mention de la délivrance du brevet: **18.03.1998**
(21) Numéro de dépôt: 94400872.1
(22) Date de dépôt: 22.04.1994
(51) Int. Cl.: B25F 3/00, A61C 1/18

(54) **Outil pneumatique**
Pneumatisches Werkzeug
Pneumatic tool

(30) Priorité: 06.05.1993 FR 9305462
(43) Date de publication de la demande: 09.11.1994
(73) Titulaire: ETABLISSEMENTS CHARLES MAIRE, 74500 Evian les Bains (FR)
(72) Inventeur: Argaud, Pierre-Yves, F-74500 Evian (FR)
(74) Mandataire: Faber, Jean-Paul

(56) Documents cités:
- EP-A- 0 511 485
- WO-A-92/20491
- FR-A- 2 445 134
- FR-A- 2 660 886
- US-A- 3 574 374
- US-A- 3 835 858
- US-A- 4 493 646

## Description

La présente invention se rapporte à un outil pneumatique tel que décrit dans le préambule de la revendication 1.

Un outil de ce type est connu de l'art antérieur, par exemple, par le document US-A-3 574 374.

La présente invention vise des outils pneumatiques qui comprennent un corps dans lequel est logé un moteur pneumatique, ledit corps, à une extrémité, étant pourvu de moyens pour permettre son branchement à un tuyau de distribution d'air comprimé tandis que l'autre extrémité est solidaire d'un porte-outil terminé par une partie angulaire recevant un outil, par exemple, une mandrin de serrage d'un foret.

Très souvent, certains travaux de vissage, de dévissage, de perçage etc.. s'effectuent dans des endroits peu accessibles et les parties angulaires peuvent affecter différentes formes, soit pliées à 90°, à 120° ou encore pliées une fois à 90° puis à nouveau a 90°. On doit, par conséquent, en fonction de la nature des travaux à effectuer, avoir à sa disposition une série d'outils pneumatiques ce qui est cher et peu pratique. Un premier but de l'invention est de remédier à cet inconvénient.

Généralement, ces outils pneumatiques comportent, articulé sur le corps, un levier qui commande l'admission d'air comprimé vers le moteur, le corps étant maintenu par l'utilisateur dans la paume de la main, tandis que le levier est actionné par les doigts. On a constaté que très souvent la partie angulaire n'est pas orientée convenablement, suivant le travail à effectuer, par rapport au levier ce qui oblige l'ouvrier à effectuer des contorsions de la main qui sont fatigantes et qui nuisent à la qualité du travail à réaliser.

La technique antérieure connaît le brevet US-A-3 574 374 qui vise un instrument de chirurgie qui comprend un élément moteur et un porte-outil terminé par une partie angulaire destinée à recevoir un outil.

L'élément moteur est terminé par une douille présentant des rainures de guidage axiales et une gorge, tandis que le porte-outil est pourvu, à son extrémité correspondante, d'une partie mâle destinée à s'insérer dans la douille et présentant, d'une part, une saillie latérale destinée à s'engager sélectivement dans une rainure de la douille et, d'autre part, une butée à bille qui, en coopérant avec la gorge, assure la fixation du porte-outil sur l'élément moteur.

Avec un tel instrument, on peut modifier la position angulaire du porte-outil par rapport à l'élément moteur, mais cette modification est limitée au nombre de rainures de guidage. De plus, la modification de la position angulaire implique obligatoirement un désaccouplement du porte-outil et de l'élément moteur.

On ne peut envisager, avec l'instrument suivant le brevet américain, de réaliser un porte-outil affectant la forme d'un U, c'est-à-dire un porte-outil dans lequel la partie portant l'outil s'étend du même côté que la partie mâle destinée à s'engager dans la douille car, lors de l'utilisation, le porte-outil se désaccouplerait de l'élément moteur. On connaît également, dans le brevet FR-A-2 445 134, un outil avec un montage à baïonnette du porte-outil, mais celui-ci ne permet qu'un montage rapide du porte-outil sans possibilité de modifier la position angulaire du porte-outil.

Enfin, la demande européenne EP-A-0 511 485 décrit un montage d'un porte-outil sur un outil qui, comme le brevet US-A-3 574 374, ne permet pas d'utiliser un porte-outil en forme de U.

L'un des buts de l'invention est de remédier aux inconvénients de la technique antérieure.

L'outil pneumatique, objet de l'invention, est du type comprenant un élément moteur comportant un corps dans lequel est logé un moteur pneumatique, ledit corps comportant, à une extrémité, des moyens pour le relier à un tuyau de distribution d'air comprimé avec des moyens de commande de l'admission d'air comprimé au moteur et, à l'autre extrémité, une tête munie de moyens pour l'assemblage d'un porte-outil présentant un élément tubulaire de guidage d'un arbre pourvu de moyens d'accouplement avec le moteur pneumatique, ledit porte-outil présentant, à une extrémité, une partie angulaire pourvue d'un organe destiné à supporter un outil, et relié par une liaison cinématique audit arbre, les moyens d'assemblage de la tête au porte-outil étant du type dans lequel ledit porte-outil peut être calé dans différentes positions angulaires par rapport à la tête et à baïonnettes, l'un des éléments, la tête ou le porte-outil, comportant des rampes, tandis que l'autre élément comporte des ergots destinés à coopérer avec les rampes, ledit outil pneumatique étant caractérisé en ce que l'élément tubulaire de guidage de l'arbre est monté pivotant sur une douille, des moyens de blocage angulaire dudit élément tubulaire étant insérés entre les deux éléments et, la douille étant destinée à être montée sur la tête, l'un de ces derniers, tête ou douille, comportant les ergots et l'autre les rampes, ces dernières présentant, chacune, au moins deux crans, l'un des crans correspondant à une position dans laquelle l'élément tubulaire de guidage de l'arbre peut pivoter par rapport à la douille, tandis que l'autre correspond à une position dans laquelle les moyens de blocage calent angulairement ledit élément tubulaire.

Ainsi, on peut facilement orienter la partie angulaire par rapport aux moyens de commande de l'admission d'air comprimé au moteur pneumatique et, par conséquent, l'utilisateur peut toujours tenir le corps dans la position qui est la plus adéquate pour effectuer une opération déterminée.

Suivant une caractéristique constructive, la douille est prolongée par une jupe destinée à coiffer la tête et pourvue intérieurement d'ergots destinés à coopérer avec des rampes de ladite tête, ladite douille étant engagée sur l'élément tubulaire et portant contre une butée de ce dernier, dans ladite douille étant ménagé un logement dans lequel est inséré un ressort de compression circonscrivant l'élément tubulaire et dont une extrémité porte contre le fond du logement et l'autre extrémité contre une rondelle montée sur l'élément tubulaire et portant des tétons destinés à coopérer avec des fraisages de l'extrémité correspondante de la tête et régulièrement décalés angulairement.

Suivant une caractéristique particulière, l'élément tubulaire comporte un épaulement percé de trous qui sont traversés par les tétons.

L'invention va maintenant être décrite avec plus de détails en se référant à des modes de réalisation particuliers donnés à titre d'exemple seulement et représentés aux dessins annexés, dans lesquels :
Figure 1 est une vue en coupe axiale de l'élément moteur.
Figure 2 est une vue en perspective de l'extrémité de l'élément moteur.
Figure 3 montre en coupe axiale une partie du porte-outil.
Figure 4 est une vue en élévation de l'extrémité du porte-outil destinée à être accouplée avec l'élément moteur.
Figure 5 montre en coupe axiale l'élément moteur et le porte-outil monté.
Figure 6 et figure 7 sont des vues en coupe montrant des porte-outil différents.

L'outil représenté aux figures comprend un élément moteur A et des porte-outil B.

L'élément moteur A est constitué d'un corps 1 avec, à une extrémité, un embout 2 destiné à être relié à un tuyau d'arrivée d'air sous pression.

Dans des paliers 3 du corps 1 est tourillonné un rotor 4 d'un moteur pneumatique pourvu de palettes 5 coopérant avec la surface latérale interne d'un cylindre 6.

Le rotor 4 est solidaire d'un pignon 7 entraînant, par l'intermédiaire de deux satellites 8 et d'une couronne dentée 15, un porte-satellites 9 guidé dans des paliers 10 et 11 logés dans une tête 12 présentant un taraudage 13 se vissant sur un filetage 16 du corps 1.

Le manchon d'accouplement 9 présente des cannelures 14.

Sur le corps 1 est articulée, sur un axe 18, une poignée 19 pourvue d'un poussoir 20 destiné à coopérer avec un clapet à bille 21 poussé par un ressort de compression 23 sur son siège 22. La poignée 19 est destinée à commander l'admission d'air comprimé pour l'alimentation du moteur pneumatique.

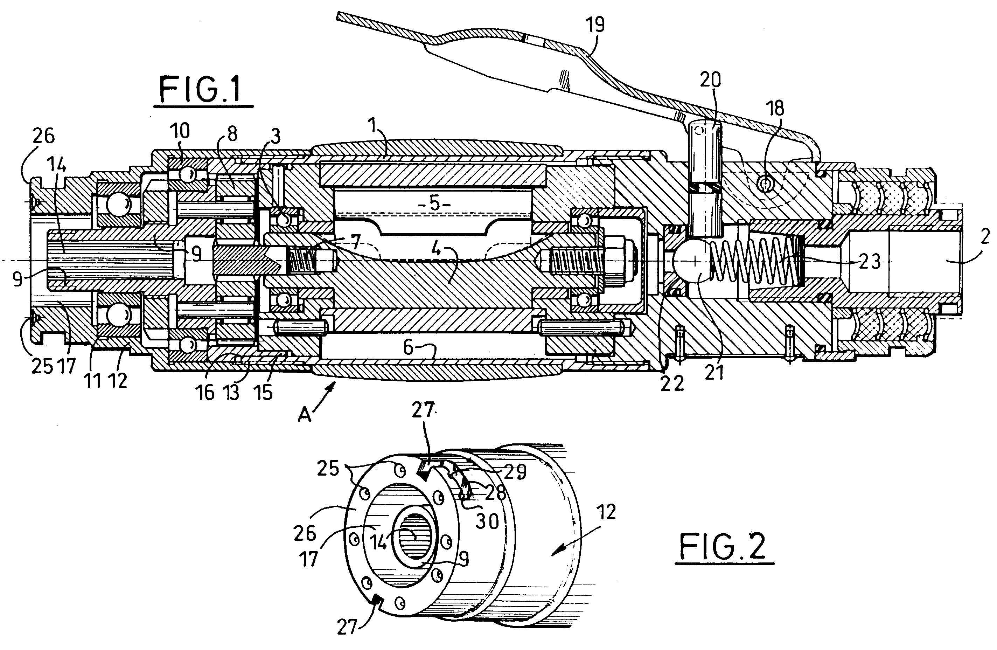

La tête 12 (voir figure 2) présente un trou central 17 et, sur sa face libre 26, une série de fraisages 25 régulièrement décalés angulairement et constituant des crans d'arrêt pour le porte-outil B comme cela sera expliqué plus loin.

La face libre 26 comporte, également, deux fentes latérales 27 décalées angulairement de 180° et débouchant dans des rampes 28 inclinées vers l'extrémité arrière de l'élément moteur A et présentant une première encoche 29 et une seconde encoche 30.

Le corps 1 est destiné à recevoir, sélectivement, des porte-outil tels que ceux représentés aux figures 5, 6 et 7.

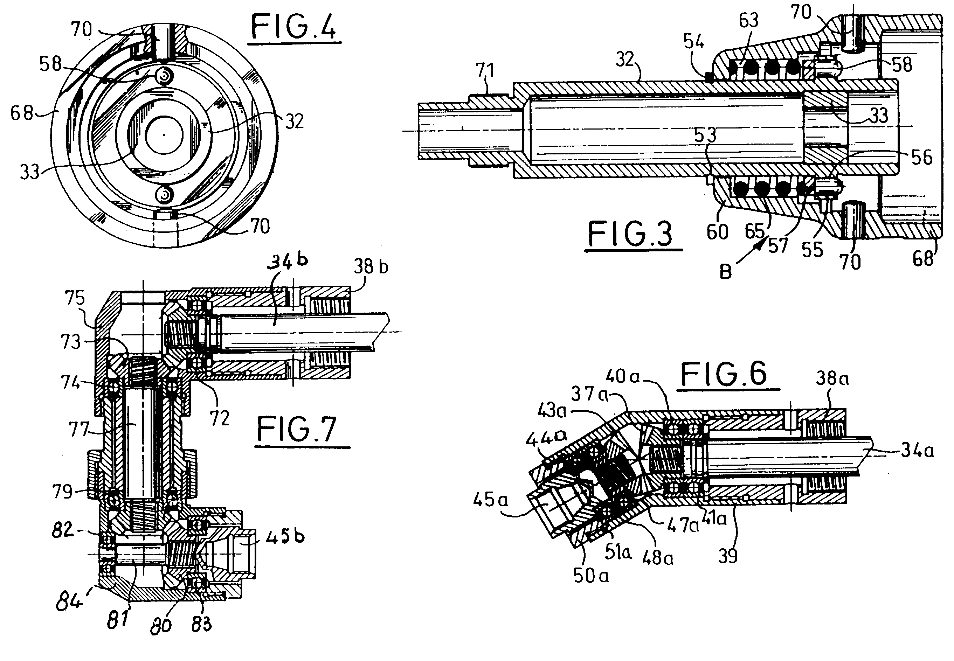

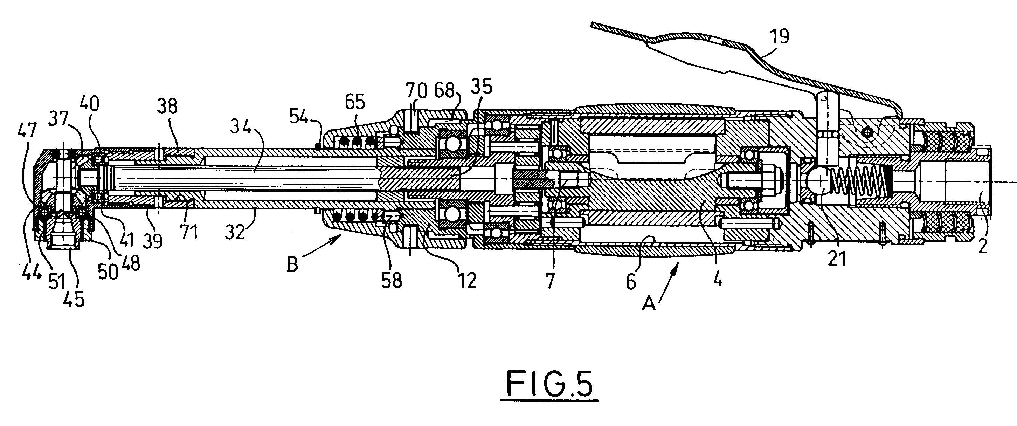

A la figure 3, on a représenté une partie d'un porte-outil B qui comprend un élément tubulaire 32 au voisinage d'une extrémité duquel est monté un palier 33, tandis que l'autre extrémité est pourvue d'un filetage 71.

Sur l'élément tubulaire 32 est fixée, dans une gorge 53, une butée 54 tandis que, du côté opposé au filetage 71, ledit élément tubulaire 32 comporte un épaulement 55 percé de deux trous 56 décalés angulairement de 180°.

Sur l'élément tubulaire 32 est montée une rondelle 57 solidaire de deux tétons 58 montés coulissants dans les trous 56.

Sur l'élément tubulaire 32 est montée, entre la butée 54 et l'épaulement 55, une douille 60 présentant un logement 63 dans lequel est logé un ressort de compression 65 circonscrivant l'élément tubulaire 32 et qui, par une extrémité, prend appui contre le fond du logement 63 et par son autre extrémité contre la rondelle 57.

La douille 60 est prolongée par une jupe 68 destinée à coiffer la tête 12 et comportant intérieurement deux ergots 70 disposés radialement et décalés angulairement de 180°, chaque ergot étant destiné à s'insérer dans une fente 27 de la tête 12 et à coopérer avec une rampe correspondante 28; on réalise ainsi un montage à baïonnette permettant, très aisément, d'accoupler le corps 1 avec un porte-outil .

Comme on le voit aux figures 5, 6 et 7, en partant de l'élément montré à la figure 3, on peut réaliser différents porte-outil .

Dans le cas de la figure 5, on a réalisé un porte-outil pour travailler à angle droit, celui-ci comprenant un arbre 34 guidé dans le palier 33 et dont une extrémité comporte des cannelures 35 destinées à coopérer avec les cannelures 14, tandis que l'autre extrémité reçoit un pignon d'angle 37.

Sur le filetage 71 est vissé un manchon 38 solidaire d'un manchon angulaire 39 présentant une portée 41 dans laquelle est monté un palier à billes 40 bloqué contre le fond de la portée 41 par l'extrémité libre du manchon 38.

Le pignon d'angle 37 coopère avec un pignon d'angle 43 solidaire de la bague interne 44 d'un palier 48 dans laquelle est calée une douille 45, le palier 48 étant logé dans une portée 47 de l'extrémité libre du manchon angulaire 39 et maintenu par un écrou 50 vissé dans un taraudage 51 dudit manchon angulaire 39, ledit écrou 50 étant alésé afin de permettre à la douille 45 de tourner librement.

La douille 45 est destinée à recevoir un mandrin agencé pour supporter des forets. On pourrait également remplacer ce mandrin par des outils pour visser ou dévisser des vis ou des écrous de différentes tailles.

Comme on le voit, le porte-outil de la figure 6 est conçu de la même façon que celui de la figure 5 et diffère de ce dernier par l'inclinaison qui est de 150°. Sur cette figure, on a reporté les références utilisées pour la figure 5 affectées de la lettre "a".

A la figure 7, on a représenté une variante du porte-outil dans laquelle il forme un double coude. Sur cette figure on a reporté, pour les parties correspondant aux autres figures, les mêmes références mais affectées de la lettre "b".

A l'extrémité de l'élément tubulaire 32, sur le filetage 71, est vissé un manchon 38b dans lequel s'étend un arbre 34b qui traverse l'élément tubulaire 32 et dont l'extrémité libre est cannelée pour coopérer avec les cannelures 14.

L'arbre 34b est solidaire d'un pignon d'angle 72 qui coopère avec un pignon d'angle 73 guidé par un palier 74 dans un manchon angulaire 75. Le pignon d'angle 73 est calé sur un arbre 77 dont l'extrémité libre comporte un pignon d'angle 79 coopérant avec un pignon d'angle 80 calé sur un arbre 81 guidé dans des paliers 82 et 83 d'un second manchon angulaire 84 solidaire du manchon 75.

Le pignon d'angle 80 est solidaire d'une douille 45b destinée à recevoir sélectivement un outil. Cette douille 45b s'étend vers la douille 68 de sorte que lorsque l'outil est utilisé, l'effort s'effectue dans une direction tendant à désaccoupler le porte-outil B, mais grâce au montage prévu par l'invention, le porte-outil B ne peut se désaccoupler intempestivement.

Lorsqu'on monte le porte-outil B sur l'élément moteur A, l'extrémité cannelée 35 de l'arbre 34 traverse le trou 17, s'insère dans le manchon d'accouplement 9 et les cannelures 14 de celui-ci assurent, avec celles de l'extrémité de l'arbre 34, une liaison rigide permettant l'entraînement dudit arbre.

La douille 68 est montée sur la tête en engageant les ergots 70 dans les fentes 27, puis est pivotée de manière que les tétons coopèrent avec les crans 29. Dans cette position, la rondelle 57 est légèrement écartée de l'épaulement 55 et on peut faire tourner l'élément tubulaire 32 sur son arbre de manière à modifier la position angulaire du manchon angulaire 39. Lors de ce pivotement, les extrémités libres des tétons 58 qui sont engagées dans les fraisages 25 échappent de ceux-ci contre l'action du ressort 65 pour coopérer avec ceux correspondant à la position angulaire sélectionnée.

On serre ensuite la douille 68 afin que les ergots 70 arrivent aux extrémités libres des rampes 28 dans les crans 30.

Lors du serrage de la douille 60, la position angulaire de l'élément tubulaire 32 n'est pas modifiée l'épaulement 55 venant se situer au voisinage de la face 26 et, le ressort 65 étant comprimé, les tétons 58 sont engagés dans les fraisages 25 avec une certaine pression de sorte que l'élément tubulaire 32 ne risque pas de tourner intempestivement.

Bien entendu, l'invention n'est pas limitée aux modes de réalisation qui viennent d'être décrits et représentés. On pourra y apporter de nombreuses modifications de détail évidemment à condition qu'elles ne visent à élargir en aucune façon l'étendue de la protection de l'invention définie par les revendications formulées ci-après.

## Revendications

1. Outil pneumatique du type comprenant un élément moteur (A) comportant un corps (1) dans lequel est logé un moteur pneumatique (4), ledit corps comportant, à une extrémité, des moyens (2) pour le relier à un tuyau de distribution d'air comprimé avec des moyens (19) de commande de l'admission d'air comprimé au moteur et, à l'autre extrémité, une tête (12) munie de moyens pour l'assemblage d'un porte-outil (B) présentant un élément tubulaire (32) de guidage d'un arbre (34) pourvu de moyens d'accouplement avec le moteur pneumatique (4), ledit porte-outil (B) présentant, à une extrémité, une partie angulaire (39, 75) pourvue d'un organe (45, 45a, 45b) destiné à supporter un outil et relié par une liaison cinématique audit arbre (34), les moyens d'assemblage de la tête (12) au porte-outil (B) étant du type dans lequel ledit porte-outil peut être calé dans différentes positions angulaires par rapport à la tête et a baïonnettes, l'un des éléments, la tête (12) ou le porte-outil (B), comportant des rampes (28), tandis que l'autre élément comporte des ergots (70) destinés à coopérer avec les rampes, caractérisé en ce que l'élément tubulaire (32) de guidage de l'arbre (34) est monté pivotant sur une douille (60), des moyens de blocage angulaire dudit élément tubulaire (32) étant insérés entre les deux éléments et, la douille (60) étant destinée à être montée sur la tête, l'un de ces derniers, tête ou douille (60), comportant les ergots et l'autre les rampes (28), ces dernières présentant, chacune, au moins deux crans (29, 30), l'un des crans correspondant à une position dans laquelle l'élément tubulaire (32) de guidage de l'arbre (34) peut pivoter par rapport à la douille (60), tandis que l'autre (30) correspond à une position dans laquelle les moyens de blocage (57, 65) calent angulairement ledit élément tubulaire (32).

2. Outil pneumatique, selon la revendication 1, caractérisé en ce que la douille (60) est prolongée par une jupe (68) destinée à coiffer la tête (12) et comportant, intérieurement, les ergots (70), la tête présentant les rampes (28), ladite douille (60) étant engagée sur l'élément tubulaire (32) et portant contre une butée (54) de ce dernier, dans ladite douille (60) étant ménagé un logement (63) dans lequel est inséré un ressort de compression (65) circonscrivant l'élément tubulaire (32) et dont une extrémité porte contre le fond du logement et l'autre extrémité contre une rondelle (57) montée sur l'élément tubulaire (32) et portant des tétons (58) destinés à coopérer avec des fraisages (25) de l'extrémité correspondante de la tête (12) et régulièrement décalés angulairement.

3. Outil pneumatique, selon la revendication 2, caractérisé en ce que l'élément tubulaire (32) comporte un épaulement (55) percé de trous (56) qui sont traversés par les tétons (58).

## Claims

1. A pneumatic tool of the type comprising a drive unit (A) comprising a body (1) in which a pneumatic motor (4) is housed, the said body comprising, at one end, means (2) for connecting it to a compressed air distribution tube with means (19) for controlling the admission of compressed air to the motor and, at the other end, a head (12) provided with means for the assembly of a tool holder (B) having a tubular element (32) for guiding a shaft (34) provided with means for coupling with the pneumatic motor (4), the said tool holder (B) having, at one end, an angular part (39, 75) provided with a device (45, 45a, 45b) intended to support a tool and connected by a kinematic coupling to the said shaft (34), the means for the assembly of the head (12) to the tool holder (B) being of the type in which the said tool holder may be fixed in different angular positions in relation to the head and to bayonets, one of the elements, the head (12) or the tool holder (B), comprising ramps (28), whereas the other element comprises lugs (70) intended to cooperate with the ramps,
**characterised in that** the tubular element (32) for guiding the shaft (34) is mounted pivoting on a bush (60), means for the angular locking of the said tubular element (32) being inserted between the two elements and, the bush (60) being intended to be mounted on the head, the one of the latter, the head or the bush (60), comprising the lugs and the other the ramps (28), the latter each having at least two notches (29, 30), the one of the notches corresponding to a position in which the tubular element (32) for guiding the shaft (34) may pivot in relation to the bush (60), whereas the other (30) corresponds to a position in which the locking means (57, 65) angularly fix the said tubular element (32).

2. A pneumatic tool, according to Claim 1,
**characterised in that** the bush (60) is extended by a skirt (68) intended to cover the head (12) and comprising, internally, the lugs (70), the head having the ramps (28), the said bush (60) being engaged on the tubular element (32) and bearing against a stop (54) of the latter, in the said bush (60) there being provided a housing (63) into which a compression spring (65) is inserted which circumscribes the tubular element (32) and one end of which bears against the base of the housing and the other end against a washer (57) mounted on the tubular element (32) and bearing dog points (58) intended to cooperate with countersunk holes (25) of the corresponding end of the head (12) and angularly offset in a regular manner.

3. A pneumatic tool, according to Claim 2,
**characterised in that** the tubular element (32) comprises a shoulder (55) drilled with holes (56) through which the dog points (58) pass.

## Patentansprüche

1. Pneumatisches Werkzeug mit einem Motorteil (A), der ein Gehäuse (1) aufweist, in dem ein pneumatischer Motor (4) angeordnet ist, wobei das Gehäuse aufweist: an einem Ende Verbindungsmittel (2), um es an eine Druckluftleitung mit Mitteln (19) zur Steuerung der Druckluftzufuhr zum Motor anzuschließen, und am anderen Ende einen Kopf (12), der mit Mitteln zum Anbringen eines Werkzeughalters (B) versehen ist, welcher ein rohrförmiges Teil (32) zur Führung einer Welle (34) aufweist, das mit Kupplungsmitteln zur Verbindung mit dem pneumatischen Motor (4) versehen ist, wobei der Werkzeughalter (B) an einem Ende einen Winkelabschnitt (39, 75) aufweist, der mit einem Bauteil (45a, 45b) zum Abstützen eines Werkzeuges versehen und durch eine kinematische Verbindung mit der Welle (34) verbunden ist, die Mittel zum Anbringen des Kopfes (12) am Werkzeughalter (B) von einer Bauart sind, bei der der Werkzeughalter in verschiedenen Winkelstellungen bezüglich des Kopfes und bajonettartig festgelegt werden kann, eines der Elemente, und zwar der Kopf (12) oder der Werkzeughalter (B), Rampen (28) aufweist, während das andere Element Vorsprünge (70) aufweist, die mit den Rampen zusammenwirken, dadurch gekennzeichnet, daß das rohrförmige Teil (32) zum Führen der Welle (34) auf einem Ringkörper (60) schwenkbar gelagert ist, wobei Mittel zum winkelmäßigen Festlegen des rohrförmigen Teils (32) zwischen die beiden Elemente eingesetzt sind und der Ringkörper (60) an dem Kopf anbringbar ist, der eine der letztgenannten, d.h. der Kopf oder der Ringkörper (60), die Vorsprünge und der andere die Rampen (28) aufweist, wobei die letzteren jeweils mindestens zwei Kerben (29, 30) aufweisen, von denen die eine Kerbe einer Stellung entspricht, in der das rohrförmige Teil (32) zum Führen der Welle (34) bezüglich des Ringkörpers (60) schwenkbar ist, während die andere Kerbe (30) einer Stellung entspricht, in der die Sperrmittel (57, 65) das rohrförmige Teil (32) winkelmäßig festlegen.

2. Pneumatisches Werkzeug nach Anspruch 1, dadurch gekennzeichnet, daß der Ringkörper (60) durch eine Schürze (68) verlängert ist, die zur Aufnahme des Kopfes (12) dient und im Inneren die Vorsprünge (70) aufnimmt, wobei der Kopf die Rampen (28) aufweist, der Ringkörper (60) mit dem rohrförmigen Teil (32) in Eingriff steht und an einem Anschlag (54) des letzteren anliegt, in dem Ringkörper (60) eine Aufnahme (63) vorgesehen ist, in die eine Druckfeder (65) eingesetzt ist, welche das rohrförmige Teil (32) umgibt und dessen ein Ende an dem Boden der Aufnahme anliegt und dessen anderes Ende an einer Scheibe (57) anliegt, die an dem rohrförmigen Teil (32) angebracht ist und Zapfen (58) aufweist, die mit winkelmäßig gleichmäßig verteilten Ausfräsungen (25) des dem Kopf (12) entsprechenden Endes zusammenwirken.

3. Pneumatisches Werkzeug nach Anspruch 2, dadurch gekennzeichnet, daß das rohrförmige Teil (32) eine Schulter (55) aufweist, die mit Löchern (56) versehen ist, durch die sich die Zapfen (58) erstrecken.
